# EUROPÄISCHE PATENTSCHRIFT

(11) **EP 1 319 290 B1**
(45) Veröffentlichungstag und Bekanntmachung des Hinweises auf die Patenterteilung: **23.03.2005**
(21) Anmeldenummer: 01978161.6
(22) Anmeldetag: 19.09.2001
(51) Int. Cl.: H04L 27/00, H04L 27/233

(54) **VERFAHREN ZUR FREQUENZAKQUISITION, INSBESONDERE ZUR INITIALFREQUENZAKQUISITION, EINER MOBILEN KOMMUNIKATIONSEINRICHTUNG**
METHOD FOR FREQUENCY ACQUISITION, ESPECIALLY FOR INITIAL FREQUENCY ACQUISITION, OF A MOBILE COMMUNICATIONS DEVICE
PROCEDE D'ACQUISITION DE FREQUENCE, NOTAMMENT D'ACQUISITION DE FREQUENCE INITIALE, POUR DISPOSITIF DE COMMUNICATION MOBILE

(30) Priorität: 20.09.2000 DE 10046575
(43) Veröffentlichungstag der Anmeldung: 18.06.2003
(73) Patentinhaber: SIEMENS AKTIENGESELLSCHAFT, 80333 München (DE)
(72) Erfinder: BIENEK, Bernd, 46395 Bocholt (DE); FALKENBERG, Andreas, Escondido, CA 92026 (US); KARGER, Stephan, 46499 Hamminkeln (DE); KREUL, Theo, 46325 Borken (DE); KUNZ, Albrecht, 46397 Bocholt (DE); LANDENBERGER, Holger, 46395 Bocholt (DE)
(86) Internationale Anmeldenummer: PCT/DE2001/003612
(87) Internationale Veröffentlichungsnummer: WO 2002/025881

(56) Entgegenhaltungen:
- EP-A- 0 526 833
- EP-A- 0 789 466

## Beschreibung

Die Erfindung befasst sich mit einem Verfahren zur Frequenzakquisition, insbesondere zur Initialfrequenzakquisition, mittels einer bekannten Synchronisationsfolge zur Einsynchronisation einer mobilen Kommunikationseinrichtung mit einem Empfangsoszillator auf die vorab bekannten Sendefrequenzen einer Basisstation, die in einem bekannten Kanalraster mit definierten Frequenzpunkten senden.

Bei mobilen Kommunikationseinrichtungen stellt ein Standard für die mobile Kommunikation eine netzweit bekannte Synchronisationsfolge zur Verfügung. Zusätzlich ist die Sendefrequenz der Basisstation mit einer ausreichend hohen, durch die Standardisiserungsgremien spezifizierten Genauigkeit bekannt. Diese beträgt zur Zeit beim UMTS-Standard 0,05 ppm.Das Kanalraster, in dem die Basisstation sendet, ist der Mobilstation dabei a priori bekannt. Bei einem UMTS-Mobilfunknetz besteht es aus Kanälen im Abstand von 200 kHz an definierten Frequenzpunkten. Dagegen ist es nicht bekannt, welcher Kanal aktuell von der Basisstation verwendet wird und welche Frequenzdrift der Oszillator der mobilen Empfangsstation aufweist. Durch die Produktions- und Temparaturstreuungen, sowie mögliche andere äußere Einflüsse kommt es beim Empfangsoszillator zu einer Frequenzungenauigkeit, die typischerweise bei +/- 25 ppm liegt. Bei der Verwendung von kostengünstigen lokalen Oszillatoren (LO) liegt die Frequenzungenauigkeit sogar meist noch über diesem Wert. Eine so große Ungenauigkeit ist nachteilig, da dies zu einem aufwendigen und langwierigen Aufsynchronisieren des Mobilteils auf die Basisstation führt.

Dieses Problem wurde bisher dadurch gelöst, dass die Mobilteile der Kommunikationseinrichtung in der Fertigung kalibriert werden und somit die Frequenzdrift des Empfangsoszillators auf ca. +/- 3 ppm abgesenkt wird. Dies ist jedoch sehr zeit- und kostenintensiv.

Außerdem wurde vorgeschlagen, beim erstmaligen Einschalten des Mobilteils bei einer Frequenzungenauigkeit von bspw. +/-25 ppm zur Autoinitialkalibrierung einen Algorithmus zu verwenden, bei dem ein mit einem SCH-Kanal (Synchronisation Channel) modulierter Träger der Basisstation mittels eines SCH-Korrelators unter Variation der Empfangsfrequenz abgetastet wird. Dabei wird bisher als SCH-Korrelator lediglich ein einziges sog. "matched filter" verwendet, welches auf die Synchronisationsfrequenz des primary SCH-Kanals, der im weiteren kurz mit SCH-Kanal bezeichnet wird, angepasst ist. Nach erfolgter Autoinitialkalibrierung kann in den darauf folgenden Synchronisationsvorgängen von einer Frequenzgenauigkeit von +/- 3 ppm ausgegangen werden. Da die Korrelationsbandbreite für die verwendeten Codes laut Spezifikation klein - in einer Größenordnung von 10-20 kHz - gegenüber dem Scanbereich ist, der gescannte Frequenzbereich jedoch die komplette UMTS-Bandbreite von 60 MHz umfassen kann, ist dieses Verfahren sehr zeit- und aufwandsintensiv. Zur Korrelation müssen in diesem Fall Schrittweiten kleiner als 14 kHz verwendet werden. Diese Schrittweite kann aus Simulationsergebnissen gewonnen werden. Bei einer verwendeten Schrittweite von z.B. 10 kHz benötigt die initiale Frequenzakquisition 6 000 Schritte.

Aufgabe der Erfindung ist es deshalb, ein Verfahren zur Verfügung zu stellen, durch die eine Frequenzakquisition im Mobilteil einer mobilen Kommunikationseinrichtung beschleunigt weden kann.

Die Aufgabe wird durch ein Verfahren gemäß Patentanspruch 1 gelöst. Weiterbildungen der Erfindung sind Gegenstand der Unteransprüche.

Der grundlegende Gedanke der Erfindung besteht darin, dass parallel zur herkömmlichen SCH-Korrelation, die nach wie vor als ein integraler Bestandteil des neu entwickelten Verfahrens verwendet wird, die Inband-Leistung mittels eines Sensors ermittelt wird. Aus der Bestimmung des lokalen Power-Maximums über den gesamten gescannten Frequenzbereich wird auf die vermutliche Kanalfrequenz geschlossen, mit der die Basisstation sendet. Dazu wird ergänzend der a priori bekannte Rasterabstand der möglichen diskreten Kanalfrequenzen der Basisstation verwendet. Bei einem UMTS-Mobilfunknetz beträgt der Rasterabstand zwischen den Frequenzpunkten 200 kHz. Außerdem ist die Sendefrequenz der Basisstation mit einer ausreichend hohen, durch die Standardisierungsgremien spezifizierten Genauigkeit von +/- 0,05 ppm bekannt. Bei einer maximalen Frequenz von 2,17 GHz ergibt sich eine max. Unsicherheit bezüglich des von der Basisstation gesendeten Signals in Höhe von ca. 20 Hz. Diese hohe Genauigkeit wird durch GPS, bzw. DVF77-Signale erzielt. Dadurch können die von der Basisstation ausgesandten Kanalfrequenzen als Differenzsignale zum Tuning des lokalen Empfangsoszillators der Mobilstation verwendet werden. Dies bringt den Vorteil, dass die Aufsynchronisation deutlich schneller erfolgt, was zu einem stark verminderten Stromverbrauch im Mobilteil führt. Dies bedeutet, dass sich die stand-by-Zeiten des Mobilteils signifikant erhöhen lassen.

Bevorzugt wird das erfindungsgemäße Verfahren bei der ersten Inbetriebnahme und/oder jeder weiteren x-ten Inbetriebnahme der mobilen Kommunikationseinrichtung angewandt. Damit werden Alterungseffekte und Temperaturabweichungen der Bauteile, die zur Frequenzerzeugung benutzt werden, automatisch nachkalibriert. Nachdem dies beim Verbindungsaufbau automatisch stattfindet, wird kein zusätzlicher Mehraufwand verursacht. Dagegen wäre eine Kalibrierung über die Temperatur in der Fertigung zeit- und kostenintensiv. Außerdem kann sich bei dem beschriebenen Verfahren die Kommunikationseinrichtung adaptiv der Umgebung des Benutzers anpassen. Des weiteren führt dieses Verfahren zu einer Erhöhung der Produktlebensdauer durch die ermöglichte Nachkalibrierung. Die Bestimmung des Platzhalters x hängt von mehreren Faktoren ab, beispielsweise von den Temperaturschwankungen in der Umgebung des Oszillators und dessen Alter. Der Wert kann 1 betragen, so dass bei jedem Aufsynchronisieren eine Nachkalibrierung erfolgt oder auch beispielsweise 2, 10, usw. Je größer der Wert von x ist, desto geringer ist der Stromverbrauch und es können längere stand-by-Zeiten des Mobilteils erzielt werden.

Bevorzugt ist es weiterhin, wenn nach der Syonchronisation die genau ermittelte Frequenz des Empfangsoszillators als Referenz übernommen wird, indem die ermittelten Hardware-Kalibrierungsparameter in einem Speicher der mobilen Kommunikationseinrichtung abgelegt werden. Dadurch kann eine Erstkalibrierung des Empfangsoszillators im HF-Teil der Mobilstation vorgenommen werden, d. h. der Algorithmus übernimmt in diesem Fall die Einstellungen zum Kalibrieren des Empfangsoszillators automatisch, die ansonsten während des Produktionsprozesses vorgenommen werden müssten.

Insbesondere ist dieses Verfahren vorteilhaft anzuwenden bei einem UMTS-Mobilfunknetz, wobei die Ermittlung der Inband-Leistung mittels eines Powersensors und die Feinbestimmung der empfangengen Trägerfrequenz mittels eines SCH-Korrelators erfolgt.

Eine mögliche Weiterbildung der Erfindung sieht vor, die mobile Kommunikationseinrichtung auf eine erste Basisstation aufzusynchronisieren und den Verbindungsaufbau zu dieser Basisstation durchzuführen, dass jedoch während der Verbindung zu einer zweiten Basisstation gewechselt wird. Dies ist dann von Vorteil, wenn sich während der Verbindung herausstellt, dass eine andere Basisstation stärker empfangen wird, als die Basisstation, auf die ursprünglich aufsynchronisiert wurde. Dadurch wird gegenüber dem bekannten Verfahren eine höhere Zuverlässigkeit und Frequenzgenauigkeit erzielt, als bei einem herkömmlichen Verfahren, bei dem nur ein SCH-Korrelator verwendet wird. Dies ergibt sich daraus, dass die Ergebnisse unabhängig voneinander gleichzeitig durch den SCH-Korrelator und den Powersensor bestätigt wird. Dies bedeutet bei einem UMTS-Mobilfunknetz, dass jeder der möglichen Kanäle dieses Netzes zur Aufsynchronisation herangezogen werden kann. Beispielsweise kann auf Kanal 2 einer Basisstation eines ersten Netzbetreibers aufsynchronisiert werden; der eigentliche Verbindungsaufbau findet jedoch anschließend auf Kanal 5 einer anderen Basisstation eines zweiten Netzbetreibers statt. Dies ist deshalb möglich, da die UMTS-Basisstationen mit annähernd gleicher Frequenz senden, deren Unterschied bei nur +/- 1 ppm liegt.

Die Erfindung wird im Folgenden anhand eines bevorzugten Ausführungsbeispiels näher beschrieben, zu dessen Erläuterung die nachstehend aufgeführten Figuren dienen. Es zeigen:
- Fig. 1: Eine schematische Übersicht über den Ablauf eines erfindungsgemäßen Ausführungsbeispiels und
- Fig. 2: die zu scannenden Frequenzbereiche für die einzelnen Schritte während des Verfahrens nach Fig. 1,
- Fig. 3: ein Messgerät eines Powersensors über einen Frequenzverlauf und
- Fig. 4: das Messergebnis aus Fig. 3, kombiniert mit dem Messergebnis eines pSCH-Korrelators über einen Frequenzbereich.

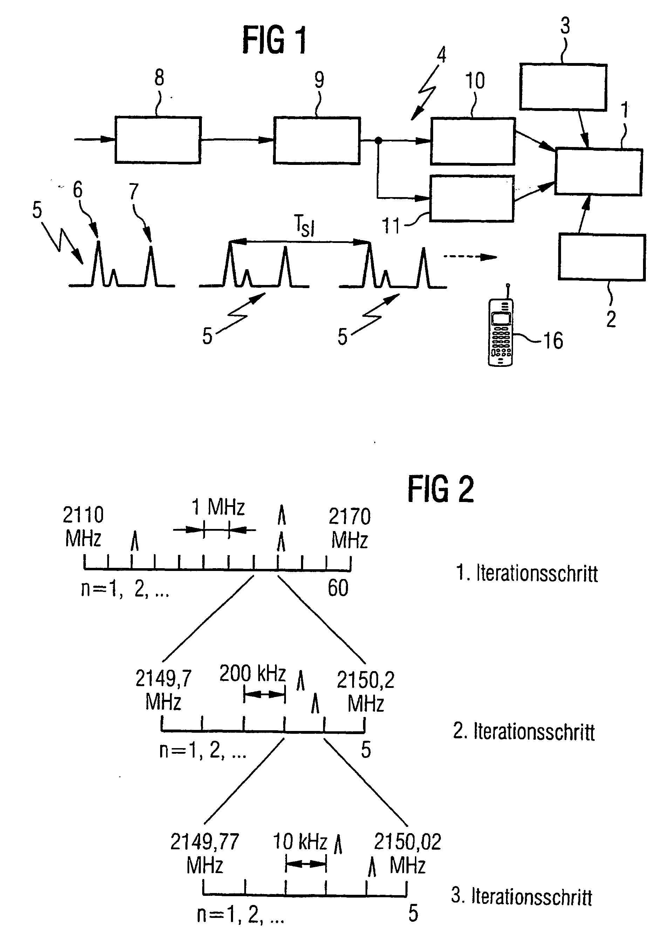

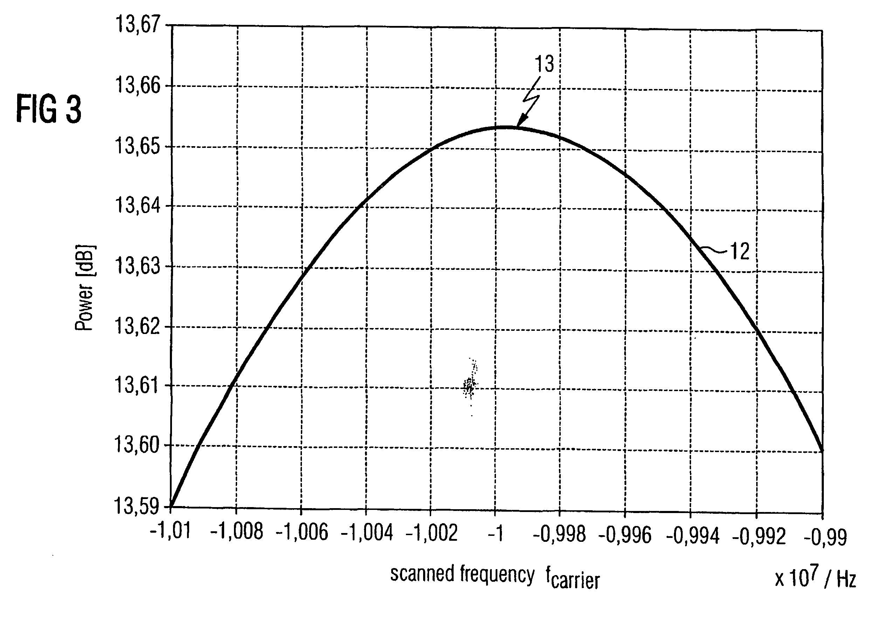

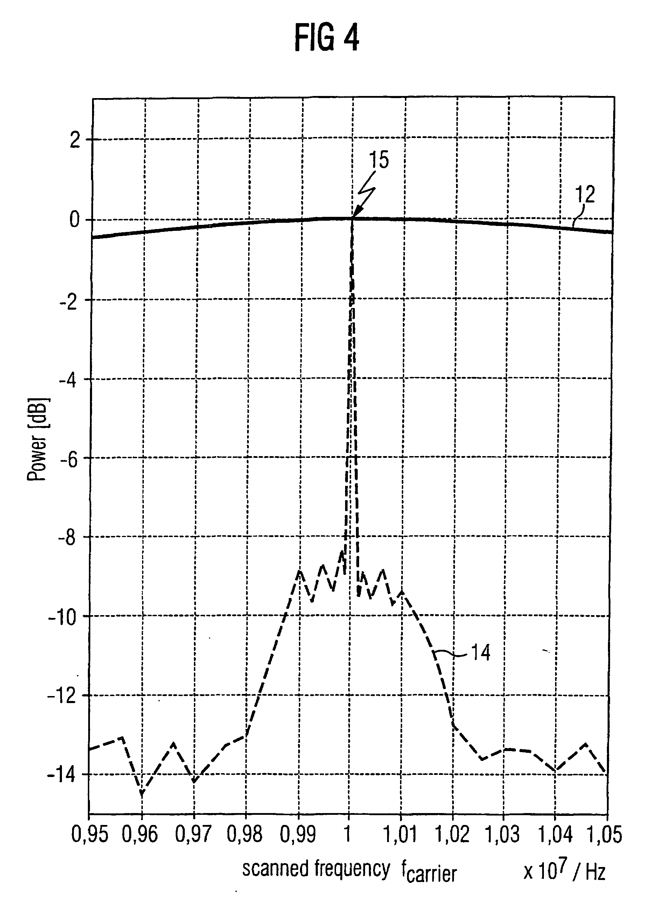

In Fig. 1 sind die einzelnen Gruppen von Informationen angegeben, die in einem Evaluator 1 zusammenfließen und aus denen die Frequenzakquisition vorgenommen werden kann. Zum einen fließt das a-priori-Wissen 2 über das Kanalraster der Basisstation in die Evaluation ein; des weiteren das mit einem Powersensor 3 gemessene Ergebnis der Inband-Leistung über einen Frequenzbereich, wie dies in Fig. 3 dargestellt ist. Außerdem fließt die Information ein, die über einen primary synchronisation channel (pSCH) 4 gewonnen wird, wie dies in Fig. 4 dargestellt ist. In dem pSCH 4 werden Signalpakete 5 in einem zeitlichen Abstand Tₛₗ slotweise übertragen. Die in Fig. 1 dargestellten Signalpakete 5 weisen ein zweistrahliges Signal 6 von einer ersten Basisstation und ein einstrahliges Signal 7 von einer zweiten Basisstation auf. Die empfangenen Signalpakete 5 werden über ein matched filter 8 einer slotweisen Akkumulation 9 unterzogen. Nachdem die so erhaltenen Daten über einen Integrator 10 und einen peak detector 11 bearbeitet wurden, wird die daraus gewonnene Information an den Evaluator 1 weitergegeben. In diesem erfolgt dann die genaue Bestimmung der Empfangsfrequenz des Empfangsoszillators in der Mobilstation 16 der mobilen Kommunikationseinrichtung.

In Fig. 2 ist der Ablauf einer genauen Ermittlung der Frequenzdrift des Empfängeroszillators und somit der Kalibrierung desselben anhand eines UMTS-Mobilfunknetzes gezeigt. Das von UMTS abgedeckte Frequenzband ist 60 MHz breit und weist durchnumerierte Kanäle auf. Die Mitten-Trägerfrequenz der Basisstation liegt bei ca. 2,1 GHz. Zur groben Bestimmung der Sendefrequenz der Basisstation wird in einem ersten Iterationsschritt die Inband-Leistung, die eine Bandbreite von ca. 3,84 MHz aufweist, mittels des Powersensors 3 gemessen. Dadurch wird eine Grobsuche der eigentlichen Korrelation vorgeschaltet. Die erhaltenen Resultate legen in Verbindung mit dem a-priori-Wissen des Kanalrasters, die empfangenen Kanalfrequenzen, die von unterschiedlichen Basisstationen herrühren, bereits in der Vorauswahl aus +/- 200 kHz fest, da dies genau dem Kanalraster entspricht. Dies bedeutet, dass durch den Powersensor 3 die empfangenen Kanäle im 200 kHz-Raster ermittelt werden. Das durch den Powersensor 3 ermittelte Maximum liegt bei etwa 10 MHz, wobei diese Frequenz schon um die Mitten-Trägerfrequenz der Basisstation reduziert ist. Aufgrund des a-priori-Wissens des Kanalrasters kann die Schrittweite bei 1 MHz liegen, wobei die Kanalfrequenz bis auf +/- 200 kHz bestimmt werden kann, d. h. durch den Powersensor 3 werden die empfangenen Kanäle im 200-kHz-Raster ermittelt, auf dem die Basisstationen senden. Es kann auch eine Schrittweite von über 1 MHz verwendet werden; allerdings wird es bevorzugt, die geringere Schrittweite von 1 MHz zu verwenden, wenn mehre Basisstationen senden.

Die Feinjustierung der Frequenz des Empfangsoszillators erfolgt über den pSCH-Korrelator, der nach einem vorgegebenen Standard spezifiziert ist. Die Ergebnisse dieses Korrelators werden dazu verwendet, Frequenzabweichungen des Empfangsoszillators zu korrigieren, die aufgrund von Bauteiltoleranzen und Temperaturschwankungen existieren.

Aufgrund des so gefundenen Kanalrasters ist durch einen zweiten Iterationsschritt das Feintuning der Oszillatordrift mittels pSCH-Oszillator ergibt, mit bedeutend geringerem Aufwand möglich. Beim zweiten Iterationsschritt wird das empfangene Signal mit der schon bekannten und netzweit einheitlichen pSCH-Sequenz verglichen. Der pSCH-Korrelator weist eine sehr enge Korrelationsbandbreite auf, d.h. nur bei sehr kleiner Frequenzverstimmung wird hier ein deutliches, aber leistungsmäßig sehr großes Scanresultat erhalten. Die Korrelationsbandbreite liegt bei 10-20 kHz, insbesondere bei ca. 16 kHz, was aus Simulationsergebnissen gewonnen werden kann. Wenn sich die Synchronisationscodes während des Standardisierrungsprozesses ändern, können sich für die Korrelationsbandbreite auch andere Werte ergeben.

Nachdem die Kanalfrequenz schon bis auf +/- 200 kHz bestimmt ist, kann nun in einem dritten Iterationsschrittmit mit einer unterhalb der Korrelationsbandbreite liegenden Schrittweite, bspw. hier 10 kHz mit wenigen Schritten die genaue Frequenz, auf der die Basisstation sendet, bestimmt werden.

Der dritte Iterationsschritt ist jedoch entbehrlich, wenn das a-priori-Wissen über das Kanalraster verwendet wird und der lokale Oszillator (LO) der Mobilstation bereits so gut kalibriert wurde, dass er nur noch eine Ungenauigkeit von +/- 3 ppm aufweist; dies entspricht 6 kHz.

Fig. 4 zeigt ein Diagramm, in dem zum einen die in Fig. 3 dargestellte Inband-Leistung 12 und deren Maximum 13 gezeigt sind. Zum anderen ist unter der Inband-Leistung 12 des Powersensors 3 der Output 14 des pSCH-Korrelators im Basisband aufgetragen. Auch hier wurde eine Korrektur um die Trägerfrequenz der Basisstation von ca. 2,1 GHz vorgenommen. Der Output 14 des pSCH-Korrelators weist eine Korrelationsspitze 15 bei 10 MHz auf. Aus diesem Ergebnis kann auf die tatsächliche Schwingfrequenz des Empfangsoszillators in der Mobilstation geschlossen werden, da das Kanalraster, in welchem die Basisstation sendet, der Mobilstation a priori bekannt ist. Dabei ist die Trägerfrequenz der Basisstaton mit einer Genauigkeit von 0,05 ppm genau kalibriert. Durch den Vergleich der gefundenen Position der gemessenen Korrelationsspitze 15 mit der bekannten Kanalfrequenz der Basisstation wird die Abweichung des Empfangsoszillators der Mobilstation 16 von der bekannten Referenzfrequenz ermittelt. Somit werden die Daten für eine Autokalibrierung gewonnen. Die Produktionsstreuungen in der Eigenfrequenz des Empfangsoszillators von +/- 25 ppm können insoweit ausgeglichen werden, dass für künftige Synchronisationsvorgänge von einer max. Abweichung von +/- 3 ppm ausgegangen werden kann. Damit werden künftige Synchronisationsprozesse wesentlich beschleunigt.

Handelt es sich um einen Erstsynchronisationsfall, d. h. die Erstinbetriebnahme des Geräts beim Kunden, ergibt sich damit eine max. Abweichung von 50 ppm von der Referenzfrequenz. Dies bedeutet, dass die pSCH-Korrelation bspw. in 50 Schritten der Schrittweite 1 ppm, d.h. 2 kHz, erfolgen kann. Nach erfolgter Erstkalibrierung beträgt die max. zulässige Abweichung dann nur noch 3 ppm. Die pSCH-Korrelation benötigt dann nur noch sechs Schritte bei einer gleichen Schrittweite von 2 kHz. Dies bedeutet, dass nach erfolgter Erstsynchronisation die beschriebene Autofrequenzakquisition fast 10 mal schneller arbeitet.

Während der Erstkalibrierung des Empfangsoszillators im HF-Teil des Mobilteils 16 kann der Algorithmus Einstellungen zum Kalibrieren des Empfangsoszillators vornehmen, die ansonsten während des Produktionsprozesses vorgenommen werden müssten. Anstatt die Kalibrierung während des Produktionsprozesses vorzunehmen, geschieht dies automatisch während der ersten Inbetriebnahme des Geräts beim Kunden. Nach der Synchronisation wird die genau ermittelte Frequenz des Empfangsoszillators als Referenz übernommen, indem die Hardware-Kalibrierungsparameter abgespeichert werden.

## Patentansprüche

1. Verfahren zur Frequenzakquisition, insbesondere zur Initialfrequenzakquisition, mittels einer bekannten Synchronisationsfolge zur Einsynchronisation einer mobilen Kommunikationseinrichtung (16) mit einem Empfangsoszillator auf die vorab bekannten Sendefrequenzen einer Basisstation, die in einem bekannten Kanalraster mit definierten Frequenzpunkten innerhalb eines Bandes senden, **gekennzeichnet durch** folgende Schritte:
a) Ermittlung der Inband-Leistung der bekannten Synchronisationsfolge mittels eines Sensors (3) **durch** Scannen eines Frequenzbereichs,
b) Grobbestimmung des lokalen Power-Maximums der Inband-Leistung und somit der empfangenen Trägerfrequenz über dem gescannten Frequenzbereich,
c) Schließen auf die vermutliche Kanalfrequenz, mit der die Basisstation sendet, aufgrund der Kenntnis des Kanalrasters der Sendefrenquenzen der Basisstation,
d) Feinbestimmung der empfangenen Trägerfrequenz **durch** einen Vergleich mit der bekannten Synchronisationsfolge,
e) Korrektur der Frequenzabweichung des Empfangsoszillators von der gesendeten Trägerfrequenz.

2. Verfahren nach Anspruch 1,
**dadurch gekennzeichnet, dass**
es bei der ersten Inbetriebnahme und/oder jeder weiteren Inbetriebnahme der mobilen Kommunikationseinrichtung angewandt wird.

3. Verfahren nach einem der vorstehenden Ansprüche,
**dadurch gekennzeichnet, dass**
die ermittelte Frequenz des Empfangsoszillators als Referenz übernommen wird, indem sie in einem Speicher der mobilen Kommunikationseinrichtung abgelegt wird.

4. Verfahren nach einem der vorstehenden Ansprüche,
**dadurch gekennzeichnet, dass** es in einem UMTS-Mobilfunknetz angewandt wird, die Ermittlung der Inband-Leistung mittels eines Power Sensors und die Feinbestimmung der empfangenen Trägerfrequenz mittels eines SCH-Korrelators erfolgt.

5. Verfahren nach einem der vorstehenden Ansprüche,
**dadurch gekennzeichnet, dass**
die mobile Kommunikationseinrichtung auf eine erste Basisstation aufsynchronisiert und der Verbindungsaufbau zu dieser Basisstation durchgeführt wird und dass während der Verbindung zu einer zweiten Basisstation gewechselt wird.

## Claims

1. Method for frequency acquisition, especially for initial frequency acquisition, by means of a known synchronization sequence for synchronizing a mobile communications device (16) having a local oscillator with the previously known transmit frequencies of a base station that transmit in a known channel raster with defined frequency points within a band, **characterized by** the following steps:
a) determining the inband power of the known synchronization sequence by means of a sensor (3) by scanning a frequency band,
b) coarse determination of the local power maximum of the inband power, and thus of the received carrier frequency over the scanned frequency band,
c) producing the presumed channel frequency at which the base station is transmitting on the basis of knowledge of the channel raster of the transmit frequencies of the base station,
d) fine determination of the received carrier frequency by comparison with the known synchronization sequence, and
e) correction of the frequency deviation of the local oscillator from the transmitted carrier frequency.

2. Method according to Claim 1, **characterized in that** it is applied upon the first startup and/or each further startup of the mobile communications device.

3. Method according to one of the preceding claims, **characterized in that** the determined frequency of the local oscillator is adopted as reference by being stored in a memory of the mobile communications device.

4. Method according to one of the preceding claims, **characterized in that** it is applied in a UMTS mobile radio network, the determination of the inband power is performed by means of a power sensor, and the fine determination of the received carrier frequency is performed by means of an SCH correlator.

5. Method according to one of the preceding claims, **characterized in that** the mobile communications device is synchronized with a first base station, and the callup to this base station is carried out, and **in that** a switch is made to a second base station during the call.

## Revendications

1. Procédé d'acquisition de fréquence, notamment pour l'acquisition de fréquence initiale, au moyen d'une séquence de synchronisation connue en vue de la synchronisation d'un dispositif de communication mobile (16) avec un oscillateur de réception sur les fréquences d'émission préalablement connues d'une station de base qui émet dans un intervalle de canaux connu avec des points de fréquence définis à l'intérieur d'une bande, **caractérisé par** les étapes suivantes :
a) détermination de la puissance intrabande de la séquence de synchronisation connue au moyen d'un capteur (3) par balayage d'une plage fréquentielle,
b) détermination approximative du maximum de puissance local de la puissance intrabande et donc de la fréquence porteuse reçue sur la plage fréquentielle balayée,
c) déduction de la fréquence de canal probable avec laquelle la station de base émet, sur la base de la connaissance de l'intervalle de canaux des fréquences d'émission de la station de base,
d) détermination précise de la fréquence porteuse reçue par une comparaison à la séquence de synchronisation connue,
e) correction de l'écart de fréquence de l'oscillateur de réception à la fréquence porteuse reçue.

2. Procédé selon la revendication 1,
**caractérisé par le fait qu'**il est appliqué lors de la première mise en service et/ou à chaque nouvelle mise en service du dispositif de communication mobile.

3. Procédé selon l'une des revendications précédentes,
**caractérisé par le fait qu'**on prend comme référence la fréquence déterminée de l'oscillateur de réception en l'enregistrant dans une mémoire du dispositif de communication mobile.

4. Procédé selon l'une des revendications précédentes,
**caractérisé par le fait qu'**il est appliqué dans un réseau de radiocommunication mobile UMTS, que la détermination de la puissance intrabande s'effectue au moyen d'un capteur de puissance et que la détermination précise de la fréquence porteuse reçue s'effectue au moyen d'un corrélateur SCH.

5. Procédé selon l'une des revendications précédentes,
**caractérisé par le fait que** le dispositif de communication mobile se synchronise sur une première station de base, que l'établissement de liaison s'effectue vers cette station de base et qu'il peut être changé pendant la liaison vers une deuxième station de base.
